(19) **Europäisches Patentamt European Patent Office Office européen des brevets**

(11) **EP 1 897 770 B1**

(12) **FASCICULE DE BREVET EUROPEEN**

(45) Date de publication et mention de la délivrance du brevet:
**02.11.2011 Bulletin 2011/44**

(51) Int Cl.:
***B60T 8/172*** *(2006.01)*

(21) Numéro de dépôt: **07115574.1**

(22) Date de dépôt: **03.09.2007**

(54) **Procédé de détermination d'un coefficient d'adhérence maximal d'un pneumatique**

Verfahren zur Bestimmung eines Koeffizienten der maximalen Bodenhaftung eines Reifens

Method of determining a maximum grip coefficient of a tyre

(84) Etats contractants désignés:
**DE FR IT**

(30) Priorité: **06.09.2006 FR 0653601**

(43) Date de publication de la demande:
**12.03.2008 Bulletin 2008/11**

(73) Titulaires:
- **Société de Technologie Michelin 63000 Clermont-Ferrand (FR)**
- **Michelin Recherche et Technique S.A. 1763 Granges-Paccot (CH)**

(72) Inventeurs:
- **Bertrand, David 25000 Besançon (FR)**
- **Meyer, Lionel 63530 Volvic (FR)**
- **Rehab, Hichem 63400 Chamalières (FR)**

(74) Mandataire: **Dequire, Philippe Jean-Marie Denis M.F.P. Michelin, SGD/LG/PI-F35-Ladoux, 23, place des Carmes Déchaux 63040 Clermont-Ferrand Cedex 09 (FR)**

(56) Documents cités:
WO-A-00/03889    FR-A1- 2 819 590
US-A1- 2002 010 537    US-A1- 2004 138 831

EP 1 897 770 B1

# EP 1 897 770 B1

## Description

La présente invention concerne un procédé de détermination d'un coefficient d'adhérence maximal d'un pneumatique en cours de roulage sur un sol.

Le coefficient d'adhérence maximal d'un pneumatique évolue en fonction des conditions de roulage du pneumatique, notamment en fonction du type de route sur lequel roule le pneumatique ou en fonction de la température.

Il est particulièrement intéressant de connaître en temps réel le coefficient d'adhérence maximal d'un pneumatique en roulage pour déterminer si le pneumatique est proche ou non de perdre son adhérence sur le sol.

Cette information concernant l'adhérence du pneumatique peut être transmise au conducteur du véhicule muni du pneumatique pour qu'il adapte sa conduite en conséquence, ou à un dispositif électronique de contrôle de la tenue de route du véhicule.

Il a été montré dans l'état de la technique, notamment dans WO 03/066400, que l'on peut déterminer le coefficient d'adhérence à partir de mesures des trois composantes des efforts appliqués sur le pneumatique, du couple d'autoalignement, de la pression du pneumatique et du carrossage du pneumatique.

Cette détermination est possible grâce à l'utilisation d'une fonction de transfert recevant en entrée les différents paramètres mesurés et fournissant en sortie une estimation de l'adhérence du pneumatique. Les caractéristiques de cette fonction de transfert sont déterminées par exemple par une méthode classique d'apprentissage des poids d'un réseau de neurones.

La période d'apprentissage nécessite cependant la réalisation d'essais au cours desquels le pneumatique est soumis à différentes conditions d'utilisation. En particulier, il est nécessaire de tenir compte de paramètres supplémentaires à variation lente tels que l'usure ou le vieillissement du pneumatique pour optimiser la détermination des caractéristiques de la fonction de transfert.

En raison du grand nombre de paramètres à prendre en compte, la fonction de transfert utilisée dans l'état de la technique est une fonction très complexe et coûteuse à utiliser et dont l'apprentissage est long. En effet, pour que les caractéristiques de la fonction de transfert tiennent compte de tous les paramètres, il est nécessaire de procéder à des essais en faisant varier chacun des paramètres indépendamment les uns des autres.

L'invention a notamment pour but de proposer un procédé de détermination d'un coefficient d'adhérence dont la mise en oeuvre est plus simple et plus rapide que dans l'état de la technique.

A cet effet, l'invention a pour objet un procédé de détermination d'un coefficient d'adhérence maximal d'un pneumatique en cours de roulage sur un sol, **caractérisé en ce qu**'il comprend les étapes suivantes :

- on détermine le coefficient d'adhérence maximal comme étant une sortie d'une fonction de transfert principale indépendante d'au moins un paramètre à évolution lente caractérisant l'usure et/ou le vieillissement du pneumatique, et
- on détermine au moins une entrée de la fonction de transfert principale comme étant une sortie d'une pré-fonction de transfert dépendante de ce paramètre à évolution lente.

On dit qu'une fonction de transfert est indépendante d'un paramètre si les caractéristiques de cette fonction peuvent être déterminées indépendamment des évolutions de ce paramètre. Par exemple, dans le cas d'une fonction dont les caractéristiques sont obtenues par apprentissage des coefficients d'un réseau de neurones, on détermine les caractéristiques de la fonction sans faire varier le paramètre dont la fonction doit être indépendante. Cela n'exclut cependant pas que le paramètre puisse être une entrée de la fonction, une fois ses caractéristiques déterminées.

Grâce à l'invention, la fonction de transfert principale ne dépend pas du paramètre à évolution lente. Son apprentissage est donc plus rapide que dans l'état de la technique puisqu'elle comprend au moins un paramètre en moins.

Par ailleurs, la détermination de l'entrée de la fonction de transfert principale est relativement simple du fait qu'elle est fonction d'un paramètre dont l'évolution est lente et dont la modélisation est simple et peut être obtenue par la pré-fonction de transfert de type modèle physique fonctionnel.

La combinaison de ces deux étapes permet de déterminer le coefficient d'adhérence maximal d'une façon plus simple et plus rapide que dans l'état de la technique.

Un procédé de détermination d'un coefficient d'adhérence maximal d'un pneumatique en cours de roulage selon l'invention peut en outre comporter l'une ou plusieurs des caractéristiques suivantes.

- On détermine les caractéristiques de la fonction de transfert principale par une méthode d'apprentissage.
- La pré-fonction de transfert est de type modèle physique fonctionnel.
- La fonction de transfert principale et la pré-fonction de transfert comprennent des entrées communes.
- Les entrées communes sont choisies parmi l'un quelconque des éléments de l'ensemble constitué par une valeur d'effort moteur ou freineur exercé sur le pneumatique, une valeur d'effort de poussée latérale exercé sur le pneumatique, une valeur d'effort de charge exercé sur le pneumatique, une valeur de pression du pneumatique, une valeur de carrossage du pneumatique.

- Au cours du procédé de l'invention :

  o on mesure un paramètre, dit paramètre mesuré,
  o on détermine un paramètre modifié comme étant une sortie d'une première sous-fonction de transfert de la pré-fonction, dépendante du paramètre à évolution lente et recevant en entrée le paramètre mesuré,
  o on détermine ladite au moins une entrée de la fonction de transfert principale par différence entre le paramètre modifié et un paramètre de référence.

- Le paramètre mesuré est le couple d'autoalignement du pneumatique.
- On détermine le paramètre de référence comme étant une sortie d'une seconde sous-fonction de transfert de la pré-fonction, indépendante du paramètre à évolution lente.

L'invention sera mieux comprise à la lecture de la description qui va suivre donnée uniquement à titre d'exemple et faite en se référant aux dessins annexés dans lesquels :

- la figure 1 est un organigramme du procédé de l'invention ;
- la figure 2 est un graphique représentant le couple d'autoalignement d'un pneumatique en fonction de l'effort de poussée latérale exercé sur le pneumatique, pour deux valeurs du coefficient d'adhérence données ;
- la figure 3 est un graphique représentant les évolutions des couples théorique N1 et modifié N2 en fonction du couple d'auto-alignement N réellement mesuré et de l'effort latéral Fy ;
- la figure 4 est un graphique représentant l'évolution de N3 en fonction de l'effort latéral Fy.

On considère un ensemble d'un pneumatique et d'une roue en roulage sur une chaussée.
On souhaite mesurer en temps réel le coefficient d'adhérence $\mu_{max}$ du pneumatique sur la chaussée.
Il est connu, par exemple du document WO 03/066400, que le coefficient d'adhérence $\mu_{max}$ dépend notamment des paramètres suivants :

- l'effort moteur ou freineur $F_x$ appliqué sur le pneumatique,
- l'effort de poussée latérale $F_y$ appliqué sur le pneumatique,
- la charge $F_z$ portée par le pneumatique,
- le couple d'auto-alignement N, c'est-à-dire le moment autour de l'axe vertical exercé sur le pneumatique,
- le carrossage $\gamma$ du pneumatique, et
- la pression de gonflage P.

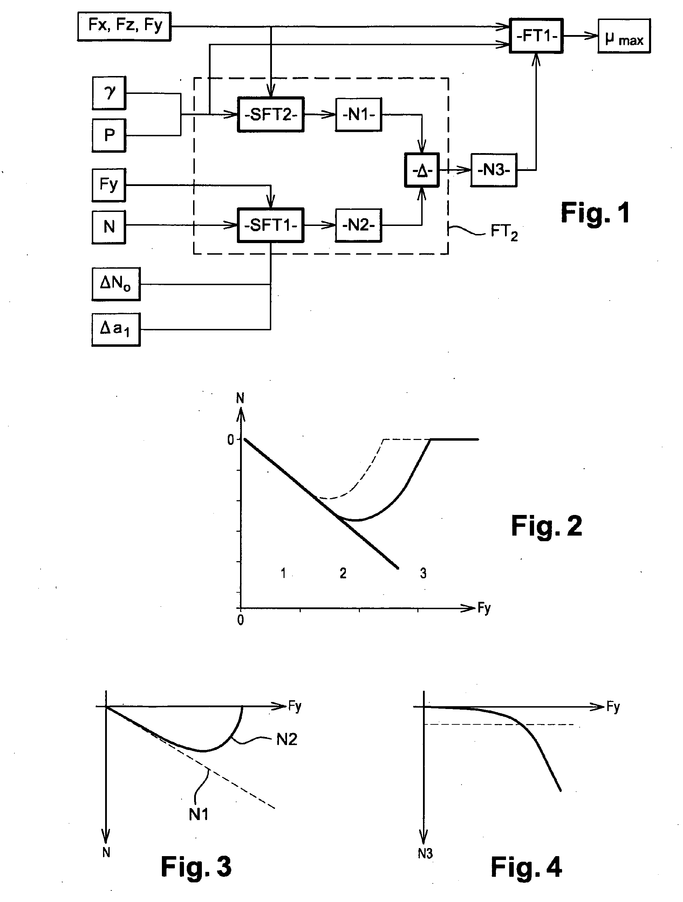

Ces différents paramètres peuvent être mesurés au moyen de capteurs portés par le pneumatique ou la roue.
Dans l'état de la technique, le coefficient d'adhérence $\mu_{max}$ est déduit de ces six paramètres à l'aide d'une fonction d'approximation par apprentissage, par exemple par apprentissage des poids d'un réseau de neurones.
En réalité, outre les six paramètres précités, le coefficient d'adhérence $\mu_{max}$ dépend également de paramètres à évolution lente, caractéristiques de l'usure et du vieillissement du pneumatique.
En effet, lorsque le pneumatique est utilisé, ou lorsqu'il vieillit, les propriétés d'adhérence de la bande de roulement évoluent, si bien que le modèle présenté ci-dessus doit être corrigé. Généralement, l'usure de la bande de roulement résulte en une évolution de la forme de l'aire de contact, et le vieillissement de la gomme du pneumatique modifie ses propriétés d'adhérence.
Du fait du grand nombre de paramètres à prendre en compte pour l'estimation du coefficient d'adhérence $\mu_{max}$, cette estimation devient trop complexe à obtenir au moyen d'une fonction d'approximation par apprentissage.
L'invention propose de réduire le nombre d'entrées de cette fonction d'approximation pour réduire sa complexité et de rendre au moins une des entrées dépendante des paramètres à évolution lente.
Pour cela, parmi les paramètres d'entrée disponibles, on distingue ceux dont l'évolution peut être modélisée par un modèle physique fonctionnel, comme par exemple les paramètres d'usure et du vieillissement du pneumatique, c'est-à-dire des paramètres à évolution lente, et le reste des paramètres dont l'évolution est complexe à modéliser.
Le procédé de détermination du coefficient d'adhérence maximale $\mu_{max}$ du pneumatique en cours du roulage sur le sol selon l'invention est schématisé sur l'organigramme de la figure 1.
Ce procédé propose de déterminer le coefficient d'adhérence maximale à l'aide de quatre fonctions FT1, SFT1, SFT2 et $\Delta$ et de huit entrées.
Une fonction de transfert principale FT1 reçoit en entrée les trois efforts Fx, Fy, Fz appliqués sur le pneumatique, la pression P, le carrossage $\gamma$ et un couple d'auto-alignement N3.
Le couple d'auto-alignement N3 est obtenu en sortie d'une pré-fonction de transfert FT2 comprenant notamment une fonction Δ de comparaison d'une valeur N1 du couple d'auto-alignement idéal que subirait un pneumatique neuf si le sol était parfaitement adhérent, avec une valeur N2 du couple d'auto-alignement que subirait le pneumatique s'il était parfaitement neuf.

En d'autres termes, le couple d'auto-alignement N3 est indépendant de l'usure et du vieillissement du pneumatique et est porteur d'une information sur le niveau d'adhérence maximum du pneumatique. En effet, si l'ensemble de l'aire de contact du pneumatique adhère parfaitement à la chaussée, alors N3 est nul. Sinon, si le pneumatique glisse partiellement, N3 n'est pas nul.

La valeur N2 du couple d'auto-alignement que subirait le pneumatique s'il était parfaitement neuf est obtenue en sortie d'une première sous-fonction de transfert SFT1 de la pré-fonction FT2, dépendante des paramètres caractéristiques du vieillissement et de l'usure du pneumatique et recevant en entrée le couple d'auto-alignement mesuré.

La valeur N1 du couple d'auto-alignement de référence est obtenue en sortie d'une seconde sous-fonction de transfert SFT2 de la pré-fonction FT2. Du fait que la valeur N1 est une valeur théorique idéale, la seconde sous-fonction de transfert SFT2 peut être un modèle physique fonctionnel tel qu'une fonction mathématique, indépendante des paramètres à évolution lente.

La seconde sous-fonction de transfert SFT2 reçoit en entrée les trois efforts Fx, Fy, Fz appliqués sur le pneumatique, la pression P et le carrossage γ.

En résumé, le procédé de l'invention comprend donc les étapes suivantes :

- on mesure le couple d'auto-alignement N,
- on modifie le couple d'auto-alignement N en fonction des paramètres à évolution lente pour obtenir un couple d'auto-alignement modifié N2 correspondant au couple d'auto-alignement que subirait un pneumatique neuf soumis aux mêmes contraintes,
- on détermine l'entrée N3 de la fonction de transfert principale FT1 par différence entre un couple d'auto-alignement de référence N1 et le couple d'auto-alignement modifié N2, le couple N1 correspondant au couple d'auto-alignement que subirait un pneumatique neuf soumis aux mêmes contraintes, si le sol était parfaitement adhérent,
- on détermine le coefficient d'adhérence maximale $\mu_{max}$ comme étant une sortie de la fonction de transfert principale FT1 recevant en entrée le couple N3.

Comme on peut le constater, six paramètres sont fournis en entrée de la fonction de transfert principale FT1, c'est-à-dire autant que dans les procédés de l'état de la technique. Cependant, à la différence de l'état de la technique, la fonction FT1 tient compte des deux paramètres à évolution lente d'usure et de vieillissement du pneumatique, par l'intermédiaire de l'entrée N3 déterminée comme étant une sortie de la pré-fonction de transfert FT2 dépendante des paramètres à évolution lente.

On trouvera par la suite une description détaillée des fonctions de transfert FT1, SFT1 et SFT2.

La figure 2 représente la relation entre le couple d'auto-alignement N et l'effort latéral $F_y$ pour deux coefficients d'adhérence donnés, lorsque $F_x$ est nul et $F_z$ est constant.

Sur ce graphique, on distingue trois zones : la zone 1 correspond à une absence de glissement de l'aire de contact du pneumatique, la zone 2 correspond à un glissement partiel et la zone 3 correspond à un glissement total.

Comme on peut le constater, lorsque l'on est dans la zone 1, c'est-à-dire lorsque le pneumatique adhère parfaitement à la chaussée, la valeur du couple d'auto-alignement N est sensiblement proportionnelle à la valeur de la poussée latérale $F_y$, le coefficient de proportionnalité dépendant majoritairement de la longueur de l'aire de contact.

Or, la valeur de sortie N1 de la sous-fonction de transfert SFT2 correspond à l'hypothèse dans laquelle le pneumatique est parfaitement adhérent, c'est-à-dire à un comportement du pneumatique tel que l'on se trouve dans la zone 1. On peut alors déterminer N1 de la manière suivante dans le cas où seul l'effort de poussée latérale Fy varie :

$$N_1 = N_0 + a_1{}^*F_y.$$

En pratique cependant, les sollicitations exercées sur le pneumatique sont nombreuses, dynamiques et couplées, et il est préférable de prendre en compte les éléments suivants :

- la variation de la longueur de l'aire de contact en fonction de la charge portée et de la pression de contact,
- la variation de la valeur du couple d'auto-alignement générée par le carrossage éventuel en l'absence de poussée latérale,
- le couplage qui existe entre la sollicitation latérale et la sollicitation dans la direction du roulement.

Après analyse du fonctionnement du pneumatique et mise en oeuvre d'essais expérimentaux, les inventeurs proposent d'utiliser l'équation suivante, pour prendre en compte ces phénomènes.

$$N_1 = N_0 + a_1.F_y + a_2.F_x + a_3.F_y.F_z + a_4.F_y.F_z.P + a_5.\gamma + a_6.\gamma.F_z$$

$$+ a_7.\gamma.F_z.P + a_8.\gamma.F_x + a_9.F_y.\sqrt{\frac{F_z}{P^{0.8}}} + a_{10}.F_y.\frac{F_z}{P^{0.8}}$$

Ainsi, la seconde sous-fonction de transfert SFT2 est de nature polynomiale et permet de prendre en compte tous les comportements du pneumatique avec un faible nombre de coefficients.

Il est néanmoins possible d'utiliser tout autre type de modèle pour définir cette seconde sous-fonction de transfert SFT2.

Etant donné que la valeur du couple d'auto-alignement N1 obtenue à la sortie de la seconde sous-fonction de transfert SFT2 est une valeur idéale, elle ne tient pas compte des évolutions lentes du pneumatique.

De manière à pouvoir la comparer à la valeur du couple d'auto-alignement N réellement mesurée, il est donc nécessaire de corriger les effets des paramètres à évolution lente grâce à la première sous-fonction de transfert SFT1.

Cette sous-fonction de transfert SFT1 agit sur la relation qui existe entre le couple d'auto-alignement N et l'effort de poussée latérale $F_y$.

Comme nous l'avons vu précédemment sur la figure 2, cette courbe présente une première zone dans laquelle le coefficient d'auto-alignement N est proportionnel à l'effort de poussée latérale $F_y$.

Dans cette première zone, le pneumatique a un comportement parfaitement adhérent.

L'usure et le vieillissement du pneumatique ont tendance à modifier l'ordonnée à l'origine $N_0$ ainsi que la pente $a_1$ de la droite de la première zone.

Pour corriger ces évolutions lentes, il est donc nécessaire que la sous-fonction de transfert SFT1 connaisse les valeurs des déviations d'ordonnée à l'origine $\Delta N_0$ et de pente $\Delta a_1$ induites par le vieillissement et l'usure du pneumatique.

Pour déterminer ces valeurs, on peut procéder de deux manières différentes, en fonction du domaine de fonctionnement du pneumatique.

Dans un premier cas, on considère que les sollicitations imposées sur le pneumatique sont faibles, et qu'il est certain que le fonctionnement du pneumatique est assimilable à l'hypothèse d'un pneumatique parfaitement adhérent.

Cela se produit en pratique lors des faibles sollicitations, par exemple lorsqu'un pneumatique roule sur route sèche et en ligne droite.

Dans ce cas, la sous-fonction de transfert SFT1 compare le couple d'auto-alignement mesuré au couple théorique obtenu en sortie de la seconde sous-fonction de transfert SFT2, puis détermine les corrections d'ordonnée à l'origine $\Delta N_0$ et de pente $\Delta a_1$ à apporter au couple mesuré N pour que ces deux valeurs de couple soient égales.

Ces valeurs correctives pourront alors être utilisées par la suite pour corriger la mesure de couple d'auto-alignement mesuré N, quelles que soient les sollicitations du pneumatique.

Dans un second cas, le pneumatique est soumis à des sollicitations importantes.

Il n'est donc plus possible de faire l'hypothèse d'une adhérente parfaite du pneumatique sur le sol.

En effet, l'écart entre le couple d'auto-alignement N mesuré et le couple d'auto-alignement N2 idéal en cas d'adhérente parfaite, peut provenir d'un glissement d'une partie de l'aire de contact sur le sol et non pas d'une évolution lente des paramètres du pneumatique.

Dans ce cas, il n'est pas possible de mettre à jour les valeurs de l'ordonnée à l'origine et de la pente paramétrant la sous-fonction de transfert SFT1, ces valeurs sont donc conservées constantes.

Une fois les valeurs de la pente et de l'ordonnée à l'origine connues, la sous-fonction de transfert SFT1 est donc la suivante :

$$N2 = N - (\Delta N_0 + \Delta a_1.Fy)$$

Les évolutions de N1 et de N2 en fonction du couple d'auto-alignement N réellement mesuré et de l'effort latéral Fy sont représentées sur le graphique de la figure 3. On remarque que sous de faibles sollicitations latérales, les deux courbes sont sensiblement confondues ce qui s'explique par le fait que le pneumatique a un comportement parfaitement adhérent.

Ensuite, on détermine l'entrée N3 de la fonction de transfert principale FT1 par différence entre le couple d'auto-alignement idéal N1 et le couple d'auto-alignement modifié N2, grâce à la fonction $\Delta$.

L'évolution de N3 en fonction de l'effort latéral Fy est représentée sur la figure 4.

Cet écart N3 qui peut exister entre ces deux valeurs est porteur de l'information sur le coefficient d'adhérence maximum $\mu_{max}$.

En effet, lorsque le pneumatique est dans un mode de fonctionnement parfaitement adhérent, les valeurs N1 et N2 sont sensiblement égales, si bien que N3 est nul.

En revanche, lorsque le pneumatique est dans un mode de fonctionnement non adhérent, la valeur N3 est non nulle.

En d'autres termes, la partie N3 correspond à la partie du couple d'auto-alignement N qui n'est pas expliquée par le fonctionnement parfaitement adhérent du pneumatique. N3 est donc porteur de l'information concernant le glissement du pneumatique, c'est-à-dire d'une information liée au coefficient d'adhérence maximal.

L'invention sépare donc les paramètres dont le comportement peut être modélisé à l'aide de fonctions mathématiques simples, et les paramètres dont la modélisation serait trop complexe au moyen de modèles mathématiques.

Cette séparation permet de limiter le nombre d'entrées de la fonction de transfert principale FT1 aux seules entrées dont le comportement ne peut pas être modélisé de manière simple.

En d'autres termes, la fonction de transfert principale FT1 a pour but de modéliser les aspects liés à l'adhérence qui ne sont pas suffisamment connus ou simplifiables pour être pris en compte dans la pré-fonction FT2.

Ces phénomènes étant difficiles à modéliser de manière fonctionnelle, la fonction de transfert principale FT1 s'appuie sur un réseau de neurones dont les coefficients sont déterminés par apprentissage.

Il est important de ne mettre en oeuvre la fonction de transfert principale FT1 que lorsque la valeur du couple N3 n'est pas nulle. En effet, lorsque N3 est nul, le pneumatique adhère parfaitement à la chaussée et les paramètres mesurés ne sont pas porteurs de l'information concernant le coefficient d'adhérence.

De préférence, le traitement des données par la fonction de transfert principale n'est déclenché que lorsque la valeur absolue de N3 est supérieure à un certain seuil choisi de manière à réaliser un compromis entre la précocité de l'estimation et la qualité de l'estimation. En pratique, le seuil doit être choisi à une valeur légèrement supérieure au niveau de bruit obtenu sur la mesure du couple N, c'est-à-dire de l'ordre de 2m.daN.

**Revendications**

1. Procédé de détermination d'un coefficient d'adhérence maximal ($\mu_{max}$) d'un pneumatique en cours de roulage sur un sol, **caractérisé en ce qu'**il comprend les étapes suivantes :

   - on détermine le coefficient d'adhérence maximal ($\mu_{max}$) comme étant une sortie d'une fonction de transfert principale (FT1) indépendante d'au moins un paramètre à évolution lente caractérisant l'usure et/ou le vieillissement du pneumatique, et
   - on détermine au moins une entrée (N3) de la fonction de transfert principale (FT1) comme étant une sortie d'une pré-fonction de transfert (FT2) dépendante de ce paramètre à évolution lente.

2. Procédé selon la revendication 1, dans lequel on détermine les caractéristiques de la fonction de transfert principale (FT1) par une méthode d'apprentissage.

3. Procédé selon la revendication 1 ou 2, dans laquelle la pré-fonction de transfert (FT2) est de type modèle physique fonctionnel.

4. Procédé selon l'une quelconque des revendications précédentes, dans lequel la fonction de transfert principale (FT1) et la pré-fonction de transfert (FT2) comprennent des entrées communes.

5. Procédé selon la revendication 4, dans lequel les entrées communes sont choisies parmi l'un quelconque des éléments de l'ensemble constitué par une valeur d'effort moteur ou freineur (Fx) exercé sur le pneumatique, une valeur d'effort de poussée latérale (Fy) exercé sur le pneumatique, une valeur d'effort de charge (Fz) exercé sur le pneumatique, une valeur de pression (P) du pneumatique, une valeur de carrossage ($\gamma$) du pneumatique.

6. Procédé selon l'une quelconque des revendications précédentes, dans lequel :

   - on mesure un paramètre (N), dit paramètre mesuré,
   - on détermine un paramètre modifié (N2) comme étant une sortie d'une première sous-fonction de transfert

(SFT1) de la pré-fonction (FT2), dépendante du paramètre à évolution lente et recevant en entrée le paramètre mesuré (N),
- on détermine ladite au moins une entrée (N3) de la fonction de transfert principale (FT1) par différence entre le paramètre modifié (N2) et un paramètre de référence (N1).

**7.** Procédé selon la revendication 6, dans lequel le paramètre mesuré est le couple d'autoalignement (N) du pneumatique.

**8.** Procédé selon la revendication 6 ou 7, dans lequel on détermine le paramètre de référence (N1) comme étant une sortie d'une seconde sous-fonction de transfert (SFT2) de la pré-fonction (FT2), indépendante du paramètre à évolution lente.

## Claims

**1.** Method of determining a maximum grip coefficient ($\mu_{max}$) of a tyre as it runs on a surface, **characterized in that** it comprises the following steps:

- the maximum grip coefficient ($\mu_{max}$) is determined as being an output of a main transfer function (FT1) independent of at least one slowly varying parameter characterizing the wear and/or the ageing of the tyre and;
- at least one input (N3) of the main transfer function (FT1) is determined as being an output of a transfer prefunction (FT2) dependent on this slowly varying parameter.

**2.** Method according to Claim 1, in which the characteristics of the main transfer function (FT1) are determined by a learning procedure.

**3.** Method according to Claim 1 or 2, in which the transfer prefunction (FT2) is of the functional physical model type.

**4.** Method according to any one of the preceding claims, in which the main transfer function (FT1) and the transfer prefunction (FT2) have common inputs.

**5.** Method according to Claim 4, in which the common inputs are selected from any one of the elements of the set formed by the driving or braking force (Fx) exerted on the tyre, the lateral thrust force (Fy) exerted on the tyre, the load force (Fz) exerted on the tyre, the pressure (P) of the tyre and the camber angle ($\gamma$) of the tyre.

**6.** Method according to any one of the preceding claims, in which:

- a parameter (N), called measured parameter, is measured;
- a modified parameter (N2) is determined as being an output of a first transfer subfunction (SFT1) of the prefunction (FT2) dependent on the slowly varying parameter and receiving the measured parameter (N) as input; and
- said at least one input (N3) of the main transfer function (FT1) is determined by taking the difference between the modified parameter (N2) and a reference parameter (N1).

**7.** Method according to Claim 6, in which the measured parameter is the self-aligning torque (N) of the tyre.

**8.** Method according to Claim 6 or 7, in which the reference parameter (N1) is determined as being an output of a second transfer subfunction (SFT2) of the prefunction (FT2), independent of the slowly varying parameter.

## Patentansprüche

**1.** Verfahren zum Bestimmen eines maximalen Haftkoeffizienten ($\mu_{max}$) eines Luftreifens, während er auf dem Boden rollt, **dadurch gekennzeichnet, dass** es die folgenden Schritte umfasst:

- Bestimmen des maximalen Haftkoeffizienten ($\mu_{max}$) als Ausgang einer Hauptübertragungsfunktion (FT1), die von wenigstens einem Parameter mit langsamer Entwicklung, der den Verschleiß und/oder die Alterung des Luftreifens charakterisiert, unabhängig ist, und

- Bestimmen wenigstens eines Eingangs (N3) der Hauptübertragungsfunktion (FT1) als einen Ausgang einer Vorübertragungsfunktion (FT2), die von diesem Parameter mit langsamer Entwicklung abhängt.

2. Verfahren nach Anspruch 1, wobei die Charakteristiken der Hauptübertragungsfunktion (FT1) durch ein Lernverfahren bestimmt werden.

3. Verfahren nach Anspruch 1 oder 2, wobei die Vorübertragungsfunktion (FT2) vom Typ eines funktionalen physikalischen Modells ist.

4. Verfahren nach einem der vorhergehenden Ansprüche, wobei die Hauptübertragungsfunktion (FT1) und die Vorübertragungsfunktion (FT2) gemeinsame Eingänge besitzen.

5. Verfahren nach Anspruch 4, wobei die gemeinsamen Eingänge unter beliebigen Elementen der Menge gewählt werden, die durch einen Wert einer Antriebs- oder Bremskraft (Fx), die auf den Luftreifen ausgeübt wird, einen Wert einer Seitenschubkraft (Fy), die auf den Luftreifen ausgeübt wird, einen Wert einer Gewichtskraft (Fz), die auf den Luftreifen ausgeübt wird, einen Wert des Drucks (P) des Luftreifens und einen Wert des Radsturzes (γ) des Luftreifens gebildet ist.

6. Verfahren nach einem der vorhergehenden Ansprüche, wobei:

- ein Parameter (N), der gemessener Parameter genannt wird, gemessen wird,
- ein modifizierter Parameter (N2) als ein Ausgang einer ersten Übertragungsunterfunktion (SFT1) der Vorfunktion (FT2), die von dem Parameter mit langsamer Entwicklung abhängt und am Eingang den gemessenen Parameter (N) empfängt, bestimmt wird,
- der wenigstens eine Eingang (N3) der Hauptübertragungsfunktion (FT1) als Differenz zwischen dem modifizierten Parameter (N2) und einem Referenzparameter (N1) bestimmt wird.

7. Verfahren nach Anspruch 6, wobei der gemessene Parameter das Selbstausrichtmoment (N) des Luftreifens ist.

8. Verfahren nach Anspruch 6 oder 7, wobei der Referenzparameter (N1) als ein Ausgang einer zweiten Übertragungsunterfunktion (SFT2) der Vorfunktion (FT2), die von dem Parameter mit langsamer Entwicklung unabhängig ist, bestimmt wird.

**Fig. 1**

**Fig. 2**

**Fig. 3**

**Fig. 4**

**EP 1 897 770 B1**

**RÉFÉRENCES CITÉES DANS LA DESCRIPTION**

**Documents brevets cités dans la description**

- WO 03066400 A